(19) Europäisches Patentamt
European Patent Office
Office européen des brevets

(11) **EP 2 459 976 B1**

(12) **EUROPEAN PATENT SPECIFICATION**

(45) Date of publication and mention
of the grant of the patent:
**21.11.2018 Bulletin 2018/47**

(21) Application number: **10730135.0**

(22) Date of filing: **25.06.2010**

(51) Int Cl.:
**G01K 1/16** $^{(2006.01)}$     **G01K 7/42** $^{(2006.01)}$
**G01K 13/00** $^{(2006.01)}$

(86) International application number:
**PCT/EP2010/059106**

(87) International publication number:
**WO 2011/012386 (03.02.2011 Gazette 2011/05)**

(54) **SENSOR AND METHOD FOR DETERMINING A CORE BODY TEMPERATURE**

SENSOR UND VERFAHREN ZUR BESTIMMUNG EINER KÖRPERKERNTEMPERATUR

CAPTEUR ET PROCÉDÉ POUR DÉTERMINER LA TEMPÉRATURE CORPORELLE CENTRALE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **27.07.2009 US 228797 P**

(43) Date of publication of application:
**06.06.2012 Bulletin 2012/23**

(73) Proprietor: **CSEM Centre Suisse d'Electronique et
de
Microtechnique SA - Recherche et
Développement
2002 Neuchâtel (CH)**

(72) Inventors:
• **BERTCHI, Mattia**
  **CH-1093 La Conversion (CH)**
• **CHÉTELAT, Olivier**
  **1588 Cudrefin (CH)**
• **NEUMAN, Victor**
  **CH-2036 Cormondrèche (CH)**

(74) Representative: **Saam, Christophe
P&TS SA
Av. J.-J. Rousseau 4
P.O. Box 2848
2001 Neuchâtel (CH)**

(56) References cited:
**EP-A1- 0 399 061     US-A1- 2003 169 800
US-A1- 2004 076 215**

**Description**

<u>Field</u>

The present disclosure concerns the measurement and monitoring of physiological parameters and more particularly to a sensor device and a method for measuring and determining a core body temperature of a user.

<u>Background</u>

When determining the internal temperature of an object, or core body temperature, heat flux tDEhrough the surface layer of the object depends not only on the difference between the temperature of the object and the ambient temperature but also on the thermal conductivity of the object, the thermal conductivity being a characteristic of the material of which the object is made. For physiological temperature measurement, the object thermal conductivity is not only unknown and anisotropic but also variable in time, as a function of perfusion, for instance. Known solutions are implemented, for example, by thermometers measuring the temperature of a human being from the surface of the skin or by thermometers measuring the temperature of the contents of a process container from the surface of the container.

Normal human body temperature varies slightly from person to person and by the time of day. Consequently, each type of measurement has a range of normal temperatures. The range for normal human body temperatures, taken orally, is $36.8 \pm 0.7°C$. Temperature in the anus, vagina, or in the ear is about $37.6°C$, in the mouth is about $36.8°C$, and in the armpit is about $36.4°C$. Core body temperature is the operating temperature of an organism, specifically in deep structures of the body such as the pulmonary artery, in comparison to temperatures of peripheral tissues. The unobtrusive and non invasive monitoring of this physiological parameter is the object of intense research since more than 40 years but the gold standard is still the classical rectal temperature, a rather obtrusive method, especially for continuous ambulatory monitoring.

A common method of measurement includes rectal temperature. This measurement method is however invasive. Oral temperature measurement is also often used but can be affected by eating, hot or cold drinks, and mouth-breathing. Ear temperature measurement, such as eardrum temperature measurement using infrared sensors is not accurate. Skin temperature measurement can be influenced by medication, clothing, emotion, ambient temperature, etc. Moreover this latter method is not always reliable, especially due to core body temperature variations, as will be discussed below. Table 1 summarizes the different core temperature measurement methods and ranks their respective advantages comprising robustness, comfort, accuracy, and safety, using a ranking number comprised between 1 and 4, the higher the better.

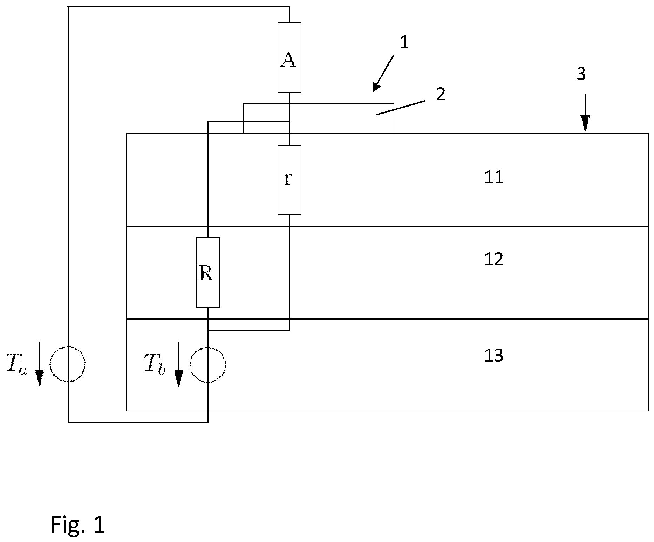

Fig. 1 schematically illustrates a known sensor 1, in a single-probe configuration, for measuring the core body temperature $T_b$ comprising a first temperature probe 2 placed in contact with the skin 3 of a user. The first temperature $T_1$ measured by the first temperature probe 2 corresponds to the temperature at the surface of the skin 3. As shown in Fig. 1, the skin 3 can be modelled by comprising an outer skin region 11 characterized by an outer thermal resistance r having a resistance value that varies with the perfusion of the outer skin region 11. The skin 3 further comprises an inert tissue region 12 showing no significant variation in perfusion and which can be characterized by a constant thermal inert resistance R and a core body region 13 being essentially at the core body temperature. The determination of the core body temperature $T_b$ thus depends on the values

| Site | Robustness | Comfort | Accuracy | Safety | Strengths | Weakness |
|---|---|---|---|---|---|---|
| Oral cavity | 1 | 2 | 2 | 2 | • Ease of access<br>• Commonly used in clinical and homecare uses | • Reduced accuracy<br>• Danger of cross infection |
| Oesophagus | 3 | 0 | 4 | 0 | • Reference core temperature | • Difficult placement<br>• Highly invasive<br>• High injury danger |
| Nasal cavity | 1 | 1 | 3 | 1 | • Good accuracy | • Highly invasive |
| Tympanic contact | 3 | 0 | 4 | 0 | • Reflects hypothalamus temperature | • Highly invasive<br>• High risk of eardrum perforation |
| Aural canal | 3 | 2 | 3 | 3 | • Approximates tympanic temperature<br>• Reduced risk of perforation | • Acoustic discomfort |
| Pulmonary artery | 4 | 0 | 4 | 0 | • Reference core temperature | • Highly invasive |
| Digestive tract | 4 | 3 | 1 | 0 | • Comfortable | • Risk of digestive occlusion<br>• Variable accuracy |
| Bladder | 4 | 0 | 4 | 0 | • Reflects core temperature | • Highly invasive |
| Rectum | 2 | 0 | 3 | 0 | • Reference core temperature | • Delay to rapid temperaturte changes<br>• Risk of rectum perforations |
| Skin surface (axilla) | 1 | 4 | 1 | 4 | • Easy access<br>• Non-invasive | • Reduced accuracy |
| Skin surface (temporal artery) | 3 | 3 | 3 | 4 | • Easy access<br>• Non-invasive | • Scanning movement required |

Table 1

of the outer thermal and thermal inert resistances $r$, $R$. Moreover, the determination of $T_b$ further depends on a heat exchange resistance A modelling the heat exchange with the ambient air as shown by Equation 1:

$$T_b = T_1 + (T_1 - T_a) \frac{Rr}{A\,(R+r)} \qquad \text{(Equation 1).}$$

An ambient temperature probe (not shown) can be used to measure an ambient temperature $T_a$, as shown in Fig. 1. The measured first temperature $T_1$ can then be correlated to the core body temperature $T_b$ assuming that the heat exchange resistance A, the outer thermal and inert thermal resistances $r$, $R$ are constant. However, if the inert thermal resistance R can be reliably assumed to be constant, the outer thermal resistance r tends to vary significantly in time, since the skin 3 assists the human thermoregulation mainly through variable perfusion and sweat. Moreover, the heat exchange resistance A is unpredictable. Consequently, if the measuring method described above is simple, it has low reliability. Table 2 summarizes the advantages of the above method where the different advantageous characteristics are rated by a number comprised between 1 and 4, the higher the better.

Table 2

| Robustness | Comfort | Accuracy | Safety |
| --- | --- | --- | --- |
| 1 | 4 | 1 | 4 |

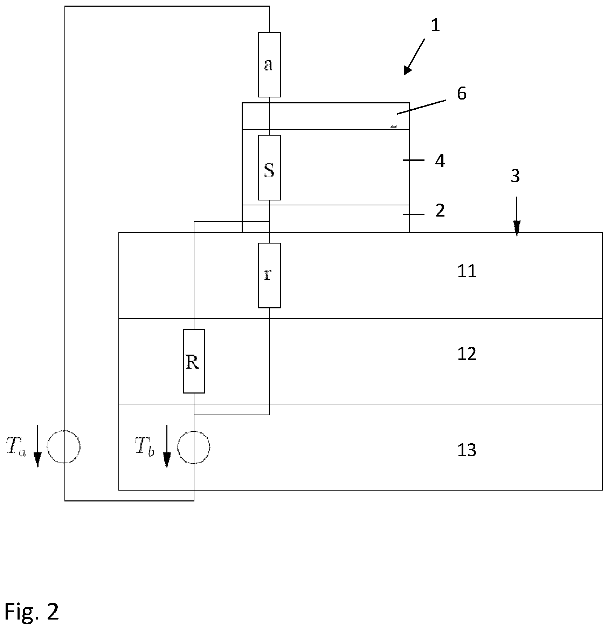

Fig. 2 illustrates another configuration of the sensor 1, where a second temperature probe 6 for measuring a second temperature $T_2$ is disposed at a distance from the first temperature probe 2. In the two-probe configuration of Fig. 2, a thermal insulator 4 is disposed between the first and second temperature probe 2, 6 for thermally insulating the probes 2, 6 from each other. In this set-up, a heat flow between the two temperature probes 2, 6 can be determined from the difference between the first and second temperature $T_1$ and $T_2$, measured at both sides of the thermal insulator 4 having a known thermal resistance value $S$. A compensation means for determining the heat flow and an evaluation unit connected to the compensation means permits to take into consideration the heat flow, increasing the accuracy of the measurement of the body temperature $T_b$. Such a two-probe sensor is described in US Patent 7,299,090. Here, the body temperature $T_b$ can be modelled using a thermal flux model defined by Equation 2:

$$T_b = T_1 + (T_1 - T_2)\,\frac{Rr}{S\,(R+r)} \qquad \text{(Equation 2)},$$

where R and r are defined as above. In practice, for best results, the thermal flux model of Equation 2 must be compensated either by the measurement of ambient temperature $T_a$ to take into account some lateral leakage of thermal flow through the thermal insulator 4, or by using an additional lateral insulation of the sensor to minimize the leakage of the thermal flow.

An advantage of the two-probe sensor 1 according to Fig. 2 is that it takes into account the temperature exchange with the ambient environment making the measurement more robust with respect to changes of the ambient temperature $T_a$. However, the measurement is still affected by possible changes of the perfusion, or outer thermal resistance r. The two-probe sensor 1 has an accuracy typically comprised between -0.7°C to 0.6°C when compared to rectal temperature, even under controlled conditions, such as bed rest and normal ambient temperature. However, the two-probe sensor 1 shows some correlation with the circadian rhythm approximated as a sine wave. Table 3 summarizes the advantages of the above two-probe sensor 1 where the different advantageous characteristics are rated by one of the numbers comprised between 1 and 4.

Table 3

| Robustness | Comfort | Accuracy | Safety |
| --- | --- | --- | --- |
| 3 | 4 | 3 | 4 |

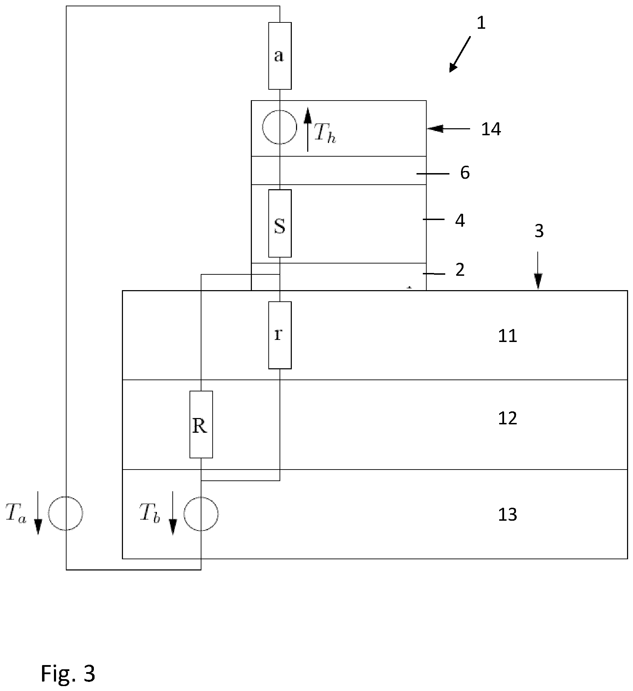

Fig. 3 represents yet another configuration of the sensor 1, where a heater device 14 is placed on top of the second temperature probe 6 of the sensor configuration of Fig. 2. In this modified two-probe sensor configuration, the first temperature $T_1$ is measured when the heat flow is controlled to zero (zero heat flow) by using a servo loop (not shown) controlling the heater device 14. More particularly, the heater temperature $T_h$ is adjusted such that the second temperature $T_2$ becomes equal to the first temperature $T_1$. When this condition is fulfilled, the core body temperature $T_b$, that can be determined using Equation 2, becomes equal to the heater temperature $T_h$.

The modified two-probe sensor 1 has an accuracy of about $\pm 0.3$°C compared to rectal or ear temperature measurements, when measured at the forehead or the sternum. The measurement is completely independent of the ambient temperature $T_a$, the outer thermal resistance $r$ or perfusion in the outer skin region 11, the inert thermal resistance $R$, and heat exchange resistance $A$. However, the modified two-probe sensor 1 comprising the regulation closed-loop is complex and has high power consumption. The modified two-probe sensor 1 is therefore not suitable for use in portable systems. Moreover, there is a risk of burn if the device heater 14 is controlled to a temperature exceeding 41°C, depending on the difference between the first and second temperatures $T_1$ and $T_2$. Table 4 summarizes the advantages of the above sensor with the different advantageous characteristics being rated by one of the numbers comprised between 1 and 4.

Table 4

| Robustness | Comfort | Accuracy | Safety |
|---|---|---|---|
| 3 | 3 | 4 | 3 |

US2004076215 discloses a device for measuring the temperature within a body from a body surface at a different temperature, comprising: a heat shield for application to the body surface, comprising an outer heat-conducting portion, and an inner heat-insulating portion; a heater or cooler to heat or cool the outer portion of said heat shield to the temperature of the body surface; a first temperature sensor positioned on a surface of the inner heat-insulating portion of the heat shield which is applied to the body surface; a second temperature sensor positioned to measure the temperature of the outer portion of the heat shield; a heater or cooler control circuit to heat or cool the outer portion of the heat shield towards the temperature measured by the first the first temperature sensor; and a second control circuit to forecast the first temperature sensor equilibrium temperature.

EP0399061 describes a method and a device for transcutaneous zero-heat-flow temperature measurement that enable shortening of the measuring time. The measurement method is based on hyperaemising a local overheating of the skin by controlled heating.

US2003169800 discloses a body temperature detector comprising a radiation sensor and electronics to compute an internal temperature of the body as a function of ambient temperature and sensed surface temperature. The function includes a weighted difference of surface temperature and ambient temperature, the weighting being varied with target temperature to account for varying perfusion rate.

Summary

The present application discloses a sensor device as defined in claim 1 and a method as defined in claim 7 for measuring and determining a core body temperature of a user which overcome at least some limitations of the prior art.

According to the invention, a sensor for measuring a core body temperature of a user, comprises: a first temperature probe to be placed against the skin of the user for measuring a first temperature; a second temperature probe at a distance from the first temperature probe, for measuring a second temperature and; a thermal insulator provided between the first and second temperature probes for thermally insulating first and second temperature probes from each other; characterized in that the thermal insulator embeds the first temperature probe, forming a contact surface extending in the plane of the first temperature probe and destined to be in contact engagement with the skin; and in that the sensor further comprises a thermally conductive shield covering at least portion of the thermal insulator, the second temperature probe being in contact with the conductive shield.

Further, according to the invention, the second temperature probe is in contact with a portion of the thermal shield arranged to be in contact with the skin.

In another embodiment, the second temperature probe can be an absolute temperature sensor and the first temperature probe is a thermocouple with its reference at a location at a substantially identical temperature as the one measured by the second temperature probe.

In yet another embodiment, the sensor can further comprise a perfusion probe for measuring a perfusion parameter depending on the level of blood perfusion of the skin.

In yet another embodiment, said skin can comprise an outer skin region having an outer and surface thermal resistance and an inert region having an inert thermal resistance, and the thermal conductivity of thermal insulator can be chosen such that the resistance ratio term $\left(\frac{R+r_1}{S+r_2} \frac{S\,r_2}{R\,r_1}\right)$ is constant.

In yet another embodiment, any of the claims from 1 to 5 and a control device controlling the operation of the sensor (1).

In yet another embodiment, said control device can be located on a first PCB mounted in the sensor.

The present disclosure also pertains to a method for measuring a core body temperature of a user using the sensor and comprising:

providing the sensor on the user such that the first temperature probe and the contact surface of the thermal insulator contact the skin;

measuring the first and second temperature with the first and second temperature probe, respectively; and determining the core body temperature from the first and second measured temperatures.

In another embodiment, said determining the core body temperature can be performed using Equation (5):

$$T_b = T_c + (T_c - T_d)\left(\frac{R+r_1}{S+r_2}\frac{S\,r_2}{R\,r_1}\right) \quad .$$

In yet another embodiment, the resistance ratio term $\left(\frac{R+r_1}{S+r_2}\frac{S\,r_2}{R\,r_1}\right)$ can be assumed to be constant.

In yet another embodiment, the sensor can further comprise a constant heat source above the thermal insulator, and said determining the core body temperature is performed using Equation (5) to which a term $-\beta Q$ is added, where $\beta$ being a constant and $Q$ the power of the constant heat source.

In yet another embodiment, the method can further comprise a step of measuring the perfusion parameter and using this parameter for determining a value for the resistance ratio term in Equation (5).

The sensor and measuring method disclosed herein allow for performing measurements that are more robust to artifacts, and to determine the core body temperature with a better accuracy than when conventional sensors are used. The present sensor allows for cancelling the effects of perfusion variations within the tissue. The claimed sensor does not require an additional heater device and a servo loop circuitry. It is thus simpler and less costly to make and has improved power consumption performance compared to conventional sensors. Other advantages of the sensor disclosed comprise a better comfort of the user, lessened obtrusiveness. Moreover, the sensor is well adapted for long-term use and has increased safety.

Brief Description of the Drawings

The preferred embodiments will be better understood with the aid of the description of an embodiment given by way of example and illustrated by the figures, in which:

Fig. 1 shows a configuration of a conventional sensor for measuring a core body temperature of a user;

Fig. 2 shows another configuration of the conventional sensor;

Fig. 3 illustrates yet another configuration of the conventional sensor;

Fig. 4 represents a sensor for measuring the core body temperature of a user according to an embodiment;

Fig. 5 shows the sensor according to another embodiment;

Fig. 6 illustrates a sensor system comprising the sensor according to the embodiments and a control device;

Fig. 7 represents the mean square error between the simulated core body temperature and its true value plotted against the thermal conductivity of the insulator resistance for the sensor according to the embodiments; and

Fig. 8 shows a graph where the core body temperature is plotted against the power of a constant heat source added to the sensor according to the embodiments.

Detailed Description of possible embodiments

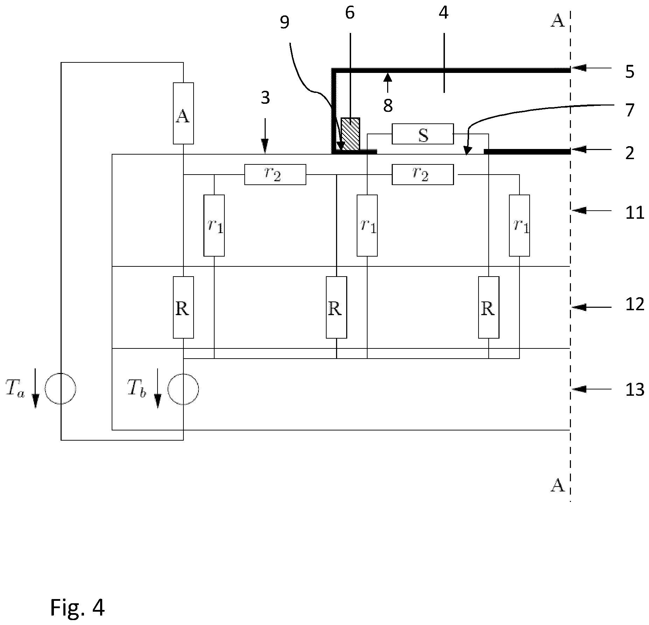

Fig. 4 represents a sensor 1 according to an embodiment. More particularly, Fig. 4 shows a half cross-section view of the sensor 1 having a circular shape. The sensor 1 comprises a first temperature probe 2 to be placed against the surface of the skin 3 of a user for measuring a first temperature $T_c$. In Fig. 4, the first temperature probe 2 is disposed concentric with the symmetry axis A-A of the sensor 1. A thermal insulator 4 embeds the first temperature probe 2, forming a contact surface 7 extending in the plane of the first temperature probe 2 and destined to be in contact engagement with the skin 3 when the sensor 1 is placed on the user. The sensor 1 further comprises a thermally conductive shield 5 covering the outer surface 8 of the thermal insulator 4. In the example of Fig. 4, the shield 5 comprises a portion, here a flange 9 at its periphery, that covers a portion of the contact surface 7 and comes also in contact with the skin 3 when the sensor 1 is placed on the user. Other configurations of the conductive shield 5 are possible provided the shield 5 covers at least a portion of the thermal insulator outer surface 8. The conductive shield 5 has a thermal conductivity that is much higher compared to the one of the thermal insulator 4 such that the temperature can be considered as substantially equal on the whole conductive shield 5.

The sensor 1 further comprises a second temperature probe 6 for measuring a second temperature $T_d$. The second temperature probe 6 is disposed at a distance from the first temperature probe 2, such as to be thermally insulated from the first temperature probe 2 by the thermal insulator 4 and in contact with the conductive shield 5. More particularly, the second temperature probe 6 is disposed on the outer surface of the conductive shield 5 such that the measured second temperature $T_d$ corresponds substantially to the temperature of the shield 5. In the example of Fig. 4, the second temperature probe 6 is disposed in contact with the portion, or flange 9, such that is also contacts the skin 3 when the sensor 1 is worn by the user. This placement of the second temperature probe 6 minimizes possible inertia due to stabilizing the temperature of the shield 5 compared to, for example, placing the second temperature probe 6 on top of the shield, opposed to the first temperature probe 2.

Also schematically represented in Fig. 4 are the underlying regions of the skin 3 and comprising an outer skin region 11 below the skin surface, an inert region 12, and a core body region 13. The heat exchange from the user inner body, or core body region 13, towards the exterior of the outer skin region 11 is also represented by an equivalent circuit representing a thermal flux model involved in the determination of the core body temperature $T_b$. More particularly, the outer skin region 11 has a variable perfusion mainly induced by vasoconstriction or vasodilatation of the blood vessels due to adjusting to external temperature variations, and/or varying activity intensity of the user. The outer skin region 11 can be characterized by an outer thermal resistance $r_1$ and a surface thermal resistance $r_2$, each of the resistances $r_1$, $r_2$ having a value that increases with decreasing perfusion and decreases with increasing perfusion of the outer skin region 11. The inert tissue region 12 has a perfusion that is substantially constant and can be characterized by an inert thermal resistance $R$ of constant value.

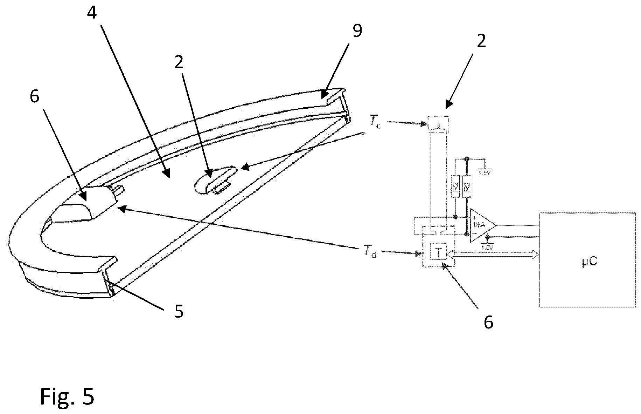

Fig. 5 represents the sensor 1 according to an exemplary embodiment. More particularly, the left hand side of the figure shows a perspective and across-section view of the sensor 1 having a circular shape, whereas a detail of the temperature probes 2, 6 and a portion of an electronic circuit are shown in the right hand side of the figure. As represented, the first temperature probe 2 is placed concentric with the conductive shield 5 and thermal insulator 4, on the contact surface 7 destined to be in contact with the skin 3. In the present embodiment, the first temperature probe 2 is formed by one end of a thermocouple 15 and the second temperature probe 6 is formed by its other end. In this configuration, the difference between the first and the second temperatures $T_c$ - $T_d$ is measured by using both ends of the thermocouple 15. Instead of measuring $T_c$ one can of course measure $T_d$ and use the difference to compute $T_c$.

Other arrangements of the first and second temperature probes 2, 6 are possible. For example, the second temperature probe 6 can be an absolute temperature sensor and the first temperature probe 2 can be a thermocouple with its reference at a location that is at a substantially identical temperature as the one measured by the second temperature probe 6.. The first and second temperature probes 2, 6 and the thermally conductive shield 5 can be made of metal, such as stainless steel. The thermal insulator 4 can be a material having an appropriate thermal conductivity, for example of about 0.03 W/Km, as will be discussed below. Such a thermal insulator 4 can be a gel material or air. Air (without convection) has a thermal conductivity of about $k$ = 0.026 W/Km between 20°C and 40°C and is a good isolating material for this application. The thermal insulator 4 can be embedded between a plastic foil, such as a polycarbonate foil, destined to contact the skin 3 and the shield 5. Preferably, the thermal insulator 4 has a thermal conductivity comprised between 0.02 and 0.05 W/Km.

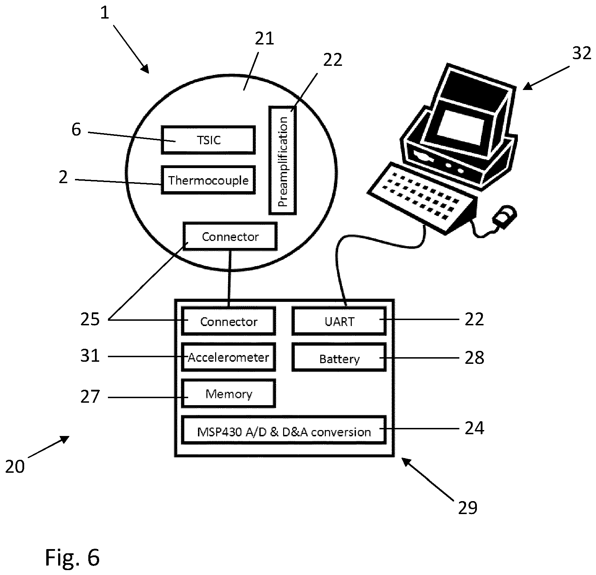

Fig. 6 shows a sensor system 20 comprising the sensor 1 and a control device controlling the operation of the sensor 1, according to an embodiment. In the example of Fig. 6, the control device can comprise circuit elements such as a signal conditioning and pre-amplification module 22, AD converters 24, power supply 28, and the chipset needed for recording the data measured by the first and second temperature probes 2, 6, such as connectors 25, and memory 27. The circuit elements of the control device can be located on a first PCB 21 mounted in the sensor 1 or also mounted on a second PCB 29, as shown in Fig. 6. In this configuration, the thermal insulator 4 can be disposed between the foil and the first PCB 21. The sensor 1 can further comprises a motion sensor 31, mounted in the second PCB 29 in the example of Fig. 6, for measuring motions of the user and determining its level of activity. The motion sensor can be a three-axis accelerometer. The sensor 1 can also comprise an ambient temperature probe (not shown) for measuring the ambient temperature $T_a$ and possibly other probes (also not shown) for measuring other physiological parameter such as $SpO_2$ and/or heart beat measurements. As shown in Fig. 6, the control device can be controlled by a computer 32. Since the core body temperature $T_b$ varies relatively slowly, its sampling frequency need not be greater than about 1Hz, a value of 0.2Hz can be appropriate. The signals generated by the motion sensor 31 can be sampled at 20Hz.

In an embodiment, a method for measuring a core body temperature of a user using the sensor 1 comprises:

providing the sensor 1 on the user such that the first temperature probe 2 and the lower surface 7 contact the skin 3;

measuring the first and second temperature $T_c$, $T_d$ with the first and second temperature probe 2, 6, respectively; and determining the core body temperature $T_b$ from the first and second measured temperatures $T_c$, $T_d$.

The core body temperature $T_b$ can be determined form the first and second measured temperatures $T_c$, $T_d$ using the thermal flux model described above and defined by Equation 4:

$$T_b = T_c + (T_c - T_d)\left(\frac{R//r_1}{S//r_2}\right) \quad = T_c + (T_c - T_d)\left(\frac{R+r_1}{S+r_2}\frac{S\,r_2}{R\,r_1}\right)$$

(Equation 4).

In the case where the change in perfusion in the outer skin region 11 is substantially homogeneous, or the outer and the surface thermal resistances $r_1$, $r_2$ vary proportionally, the ratio $r_1/r_2$ can be assumed to be constant. The term comprising the ratios of the resistances in Equation 4 can then be approximated to be constant. Furthermore, if (by an appropriate selection of the thermal conductivity $k$ of the thermal insulator 4) the ratio $R/S$ is set to be equal to $r_1/r_2$, the determination of the body temperature $T_b$ becomes independent of the values of the outer thermal and surface resistances $r_1$, $r_2$, and of the heat exchange resistance A and ambient temperature $T_a$. In this case, Equation 4 can be rewritten as Equation 5:

$$T_b = T_c + b\,(T_c - T_d)$$

(Equation 5),

where $b$ is a coefficient corresponding to the term of the resistance ratios in Equation 4 being constant.

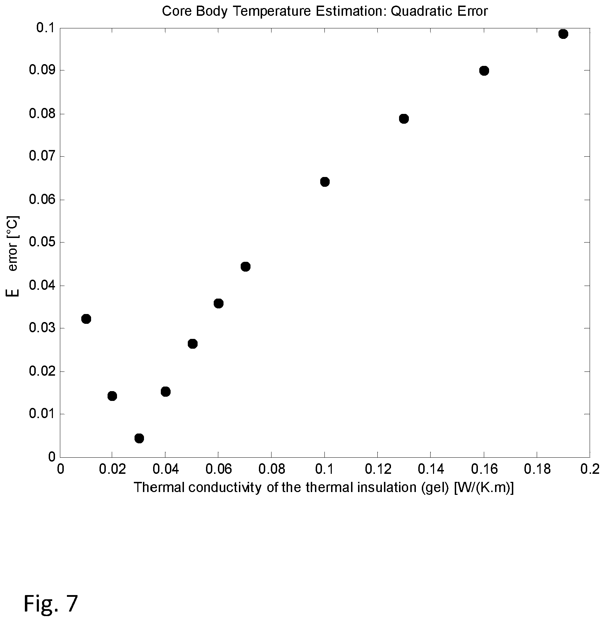

Fig. 7 shows the mean square error $E$ between the simulated measured core body temperature $T_b$ and a simulated true value, as a function of the thermal conductivity $k$, or the inverse of the insulator resistance $S$ ($k = 1/S$), of the thermal insulator 4. Here, the ambient temperature $T_a$ was defined on a horizontal isotherm located at the distance of 2.4mm from the top of the sensor 1. For each value of the thermal conductivity $k$, the precision of the estimation of the core body temperature $T_b$ has been computed (quadratic error) using Equation 5 with the coefficient $b$ ($b(k)$) minimizing the quadratic error. Fig. 7 shows that the lowest mean square error $E$ is minimal for the thermal conductivity $k$ equal to about 0.03 W/Km, and the thermal insulator 4 should be selected with its insulator resistance $S$ around this optimal value. Given this value of the thermal conductivity $k$, Equation 5 can be rewritten as:

$$T_b = T_c - 1.54\,(T_c - T_d)$$

(Equation 6),

where the coefficient b takes the value 1.54.

In yet another embodiment (not represented), the two-dimensional temperatures profiles were simulated in the case where a constant heat source is added above the thermal insulator 4, or on the face of the PCB 21 opposed to the thermal insulator 4. Such simulations are useful at assessing the influence of thermal dissipation of the electronic components placed on the sensor 1, such as the circuit elements of the control device described above. Here, the constant heat source was modelled as a flat ring, placed concentric with the sensor 1, such as to cover a surface area of about 3 $cm^2$ and producing a constant power over its whole surface. Moreover, the simulations were performed assuming a value of 25°C for the ambient temperature $T_a$, a thermal conductivity value of $k=0.04$ W/Km for the thermal insulator 4, a true core body temperature of 37°C, and a body thermal conductivity for $R$ of 1 W/Km. The value of the constant heat source was varied between 1mW and 1W.

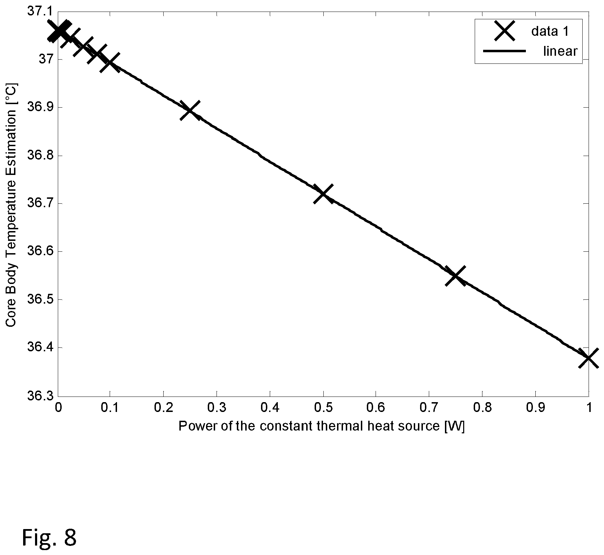

In the graph of Fig. 8 the determined core body temperature $T_b$ is plotted against the power of the constant heat source $Q$. As shown in Fig. 8, the determined core body temperature $T_b$ decreases proportionally with the power of the constant heat source $Q$ and can then be related to the power intensity of the heat source by Equation 7:

$$T_{b,Q} = T_b - \beta Q$$

(Equation 7),

where $T_{b,Q}$ is the core body temperature estimated in the presence of the electronic heat source $Q$, $T_b$ is the core body temperature estimated without the electronic heat source, and $\beta$ is a constant term whose value depends on the size, intensity and location of the constant heat source $Q$ on the sensor 1, and corresponds to 0.68 when the simulations are performed using the above parameters. Consequently, when the heat source $Q$ is added to the sensor 1, determining the core body temperature can be performed using Equation 5 and adding the term -$\beta Q$, yielding Equation 8:

$$T_{b,Q} = T_c + b\,(T_c - T_d) - \beta Q \qquad \text{(Equation 8)}.$$

where the assumption of the resistance ratio term in Equation 5 being constant ($b$) has been made.

In an embodiment not represented, the sensor 1 further comprises a perfusion probe for measuring a perfusion parameter depending on the level of blood perfusion of the skin 3, and more particularly to the outer skin region 11. Here, the perfusion probe can be based on a photopletysmography (ppg) sensor, for example, formed from an emitter comprising a radiation source emitting at the red and/or infrared wavelengths, and a receiver, such as a photodetector, for receiving the optical radiation emitted by the emitter and transmitted through the skin tissue. The radiation source can be an LED, preferably emitting at 660 nm and/or 940 nm. The receiver can be connected to an analog-to-digital converter (ADC) module delivering corresponding measured ppg signal.

According to the invention, transfer functions are used. Such transfer functions allow for correcting the determination of the core body temperature $T_b$ for possible rapid changes in perfusion in the outer skin region 11 and/or ambient temperature $T_a$. Thus, in a more generic way, Equation 5 or 6 can be written as

$$T_b = F(s)T_c + G(s)T_d + C \qquad \text{(Equation 7)},$$

where $T_b$ is the measured core body temperature, $F(s)$ a transfer function to be applied on the first temperature signal $T_c$, $G(s)$ a transfer function to be applied on the second temperature signal $T_d$, and $C$ a constant or a signal determined by the dissipated power on the thermally conductive shield 5. Here, the transfer functions $F(s)$ and $G(s)$ are chosen so as to compensate for dynamic change in parameters of the system formed by the sensor 1 and the skin 3, the parameters comprising, for example, external temperature, perfusion and possibly other parameters.

In yet another embodiment not represented, the sensor 1 is used to measure the local temperature at a measurement point corresponding to the location of the first temperature probe 2.

The sensor 1 according to the embodiments can yield good core body temperature measurement accuracy (theoretically infinite on the described model) since the influence of the ambient temperature $T_a$ and variable perfusion can be compensated. The sensor 1 is simple and has improved power consumption performance compared to the conventional sensors. Since the sensor 1 is not obtrusive, it provides a better wear comfort for the user. Preferably, the sensor 1 can be worn on locations comprising the upper sternum and the forehead. Such locations are relatively constant in structure for most users, including users suffering from obesity. Table 5 summarizes the advantages of the above sensor with the different advantageous characteristics being rated by one of the numbers comprised between 1 and 4.

Table 5

| Robustness | Comfort | Accuracy | Safety |
|:---:|:---:|:---:|:---:|
| 3 | 4 | 4 | 4 |

Reference numbers

**[0045]**

| | |
|---|---|
| 1 | sensor |
| 2 | first |
| 3 | skin |
| 4 | thermal insulator |
| 5 | thermally conductive shield |
| 6 | second temperature probe |
| 7 | contact surface of the thermal insulator |
| 8 | outer surface of the thermal insulator |
| 9 | flange |
| 11 | outer skin region |
| 12 | inert tissue region |
| 13 | core body region |
| 14 | heater device |
| 15 | thermocouple |
| 20 | sensor system |

| | | |
|---|---|---|
| 21 | first PCB | |
| 22 | signal conditioning and pre-amplification module | |
| 23 | second PCB | |
| 24 | AD converters | |
| 25 | connectors | |
| 26 | transmitter/receiver | |
| 27 | memory | |
| 28 | power supply | |
| 29 | second PCB | |
| 30 | third PCB | |
| 31 | motion sensor | |
| 32 | computer | |

| | |
|---|---|
| $A$ | heat exchange resistance |
| $b$ | coefficient |
| $E$ | mean square error |
| $k$ | thermal conductivity of the thermal insulator |
| $Q$ | power of the constant heat source |
| $R$ | inert thermal resistance |
| $r$ | outer thermal resistance |
| $r_1$ | outer thermal resistance |
| $r_2$ | surface thermal resistance |
| $S$ | insulator resistance |
| $T_a$ | ambient temperature |
| $T_b$ | core body temperature |
| $T_{b,Q}$ | core body temperature with an electronic heat source |
| $T_1, T_c$ | first temperature |
| $T_2, T_d$ | second temperature |
| $T_h$ | heater temperature |
| $y_a$ | ambient temperature distance |

**Claims**

1. A sensor (1) for measuring a core body temperature ($T_b$) of a user, comprising:

   a first temperature probe (2) to be placed against the skin (3) of the user for measuring a first temperature ($T_c$);
   a second temperature probe (6) at a distance from the first temperature probe (2), for measuring a second temperature ($T_d$) and;
   a thermal insulator (4) provided between the first and second temperature probes (2, 6) for thermally insulating first and second temperature probes (2, 6) from each other, wherein the thermal insulator (4) embeds the first temperature probe (2), forming a contact surface (7) extending in the plane of the first temperature probe (2) and destined to be in contact engagement with the skin (3);
   the sensor (1) further comprising a thermally conductive shield (5) covering at least portion of the thermal insulator (4), the second temperature probe (6) being in contact with a portion (9) of the conductive shield (5) arranged to be in contact with the skin (3); **characterized in that**
   the sensor (1) is configured for determining the core body temperature ($T_b$) from the first and second measured temperatures ($T_c$, $T_d$) using Equation (7):

$$T_b = F(s)T_c + G(s)T_d + C$$

   where $F(s)$ and $G(s)$ are transfer functions chosen so as to compensate for dynamic change in parameters of the system formed by the sensor (1) and the skin (3), and $C$ is a constant or a signal determined by power dissipated on the thermally conductive shield (5) chosen so as to cancel the effect of said dissipated power on the determined core body temperature ($T_b$), such that the sensor (1) does not require a controlled heater device.

2. The sensor (1) according to claim 1, wherein

the second temperature probe (6) is an absolute temperature sensor and
the first temperature probe (2) is a thermocouple with its reference at a location at a substantially identical temperature as the one measured by the second temperature probe (6).

3. The sensor (1) according to claim 1 or 2,
further comprising a perfusion probe for measuring a perfusion parameter depending on the level of blood perfusion of the skin.

4. The sensor (1) according to any of the claims from 1 to 3, wherein the sensor (1) is configured for determining the core body temperature ($T_b$) from the first and second measured temperatures ($T_c$, $T_d$) using Equation (5): $T_b = T_c + b (T_c - T_d)$, wherein b is a constant.

5. A sensor system (20) comprising the sensor (1) **characterized by** any of the claims from 1 to 4 and a control device controlling the operation of the sensor (1).

6. The sensor system (20) according to claim 5, wherein
said control device is located on a first PCB (21) mounted in the sensor (1).

7. A method for measuring a core body temperature ($T_b$) of a user using the sensor (1) **characterized by** any of the claims from 1 and 4, comprising:

   providing the sensor (1) on the user such that the first temperature probe (2) and the contact surface (7) of the thermal insulator (4) contact the skin (3);
   measuring the first and second temperature ($T_c$, $T_d$) with the first and second temperature probe (2, 6), respectively; and
   determining the core body temperature ($T_b$) from the first and second measured temperatures ($T_c$, $T_d$) using Equation (7):

$$T_b = F(s)T_c + G(s)T_d + C$$

   where F(s) and G(s) are transfer functions chosen so as to compensate for dynamic change in parameters of the system formed by the sensor (1) and the skin (3), and C is a constant or a signal determined by power dissipated on the thermally conductive shield (5) chosen so as to cancel the effect of said dissipated power on the determined core body temperature ($T_b$).

8. The method according to claim 7, wherein determining the core body temperature ($T_b$) from the first and second measured temperatures ($T_c$, $T_d$) is performed using Equation (5): $T_b = T_c + b (T_c - T_d)$, wherein b is a constant.

9. The method according to claim 8,
wherein b is assumed to be 1.54.

10. The method according to claim 8, wherein
the sensor (1) further comprises a constant heat source above the thermal insulator (4), and wherein said determining the core body temperature ($T_b$) is performed using Equation (5) to which a term $-\beta Q$ is added, where $\beta$ being a constant and $Q$ the power of the constant heat source.

11. The method according to any one of claims 8 to 10, wherein the sensor (1) further comprises a perfusion probe for measuring a perfusion parameter, and wherein the method further comprises a step of measuring the perfusion parameter and using this parameter for determining a value for the constant bin Equation (5).

**Patentansprüche**

1. Sensor (1) zum Messen einer Kernkörpertemperatur ($T_b$) eines Benutzers, umfassend:

   eine erste Temperatursonde (2), welche gegen die Haut (3) des Benutzers zum Messen einer ersten Temperatur ($T_c$) anzuordnen ist;

eine zweite Temperatursonde (6) in einem Abstand zur ersten Temperatursonde (2), um eine zweite Temperatur ($T_d$) zu messen; und

einen Wärmeisolator (4), welcher zwischen der ersten und der zweiten Temperatursonde (2, 6) vorgesehen ist, um die erste und die zweite Temperatursonde (2, 6) voneinander thermisch zu isolieren, worin der Wärmeisolator (4) die erste Temperatursonde (2) einbettet, was eine Kontaktfläche (7) bildet, die sich in der Ebene der ersten Temperatursonde (2) erstreckt und dazu bestimmt ist, in Kontakt mit der Haut (3) zu kommen;

wobei der Sensor (1) zudem eine wärmeleitfähige Abschirmung (5) umfasst, die mindestens einen Teil des Wärmeisolators (4) abdeckt, wobei die zweite Temperatursonde (6) in Kontakt mit einem Abschnitt (9) der leitenden Abschirmung (5) steht, welche angeordnet ist, um mit der Haut (3) in Kontakt zu sein;

**dadurch gekennzeichnet, dass**

der Sensor (1) konfiguriert ist, um die Kernkörpertemperatur ($T_b$) aus der ersten und zweiten gemessenen Temperatur ($T_c$, $T_d$) zu bestimmen, unter Verwendung der Gleichung (7):

$$T_b = F(s)T_c + G(s)T_d + C$$

wobei F (s) und G (s) Übertragungsfunktionen sind, welche so gewählt werden, dass dynamische Veränderungen der Parameter des Systems, das durch den Sensor (1) und die Haut (3) gebildet wird, kompensiert werden, und C eine Konstante oder ein Signal ist, welche(s) durch die Verlustleistung an der wärmeleitfähigen Abschirmung (5) bestimmt wird, um den Effekt der besagten Verlustleistung auf der bestimmten Kernkörpertemperatur ($T_b$) aufzuheben, so dass der Sensor (1) keine kontrollierte Heizvorrichtung benötigt.

2. Sensor (1) gemäss Anspruch 1, worin die zweite Temperatursonde (6) ein absoluter Temperatursensor ist und die erste Temperatursonde (2) ein Thermoelement mit seiner Referenz an einer Stelle mit einer im Wesentlichen identischen Temperatur wie diejenige, die von der zweiten Temperatursonde (6) gemessen wird.

3. Sensor (1) gemäss Anspruch 1 oder 2, zudem umfassend eine Perfusionssonde zum Messen eines Perfusionsparameters in Abhängigkeit vom Grad der Blutperfusion der Haut.

4. Sensor (1) gemäss irgendeinem der Ansprüche 1 bis 3, worin der Sensor (1) konfiguriert ist, um die Kernkörpertemperatur ($T_b$) aus der ersten und zweiten gemessenen Temperatur ($T_c$, $T_d$) zu bestimmen, unter Verwendung der Gleichung (5): $T_b = T_c + b\,(T_c\text{-}T_d)$, wobei b eine Konstante ist.

5. Sensorsystem (20), mit dem Sensor (1), welcher durch irgendeinen der Ansprüche 1 bis 4 gekennzeichnet ist, und einer Steuervorrichtung, welche den Betrieb des Sensors (1) steuert.

6. Sensorsystem (20) gemäss Anspruch 5, worin die besagte Steuervorrichtung auf einer ersten Leiterplatte (21) angeordnet ist, die im Sensor (1) montiert ist.

7. Verfahren zum Messen einer Kernkörpertemperatur ($T_b$) eines Benutzers unter Verwendung des Sensors (1), der durch irgendeinen der Ansprüche 1 und 4 gekennzeichnet ist, umfassend:

Bereitstellen des Sensors (1) auf den Benutzer, so dass die erste Temperatursonde (2) und die Kontaktfläche (7) des Wärmeisolators (4) die Haut (3) kontaktieren;

Messen der ersten und der zweiten Temperatur ($T_c$, $T_d$) mit der ersten bzw. der zweiten Temperatursonde (2, 6); und

Bestimmen der Kernkörpertemperatur ($T_b$) aus der ersten und der zweiten gemessenen Temperatur ($T_c$, $T_d$) unter Verwendung der Gleichung (7):

$$T_b = F(s)T_c + G(s)T_d + C$$

wobei F (s) und G (s) Übertragungsfunktionen sind, welche so gewählt werden, dass dynamische Veränderungen der Parameter des Systems, das durch den Sensor (1) und die Haut (3) gebildet wird, kompensiert werden, und C eine Konstante oder ein Signal ist, welche(s) durch die Verlustleistung an der wärmeleitfähige Abschirmung (5) bestimmt wird, um den Effekt der besagten Verlustleistung auf der bestimmten Kernkörpertemperatur ($T_b$) aufzuheben.

**8.** Verfahren gemäss Anspruch 7, worin das Bestimmen der Kernkörpertemperatur ($T_b$) aus der ersten und der zweiten gemessenen Temperatur ($T_c$, $T_d$) durchgeführt wird, unter Verwendung der Gleichung (5): $T_b = T_c + b\,(T_c\text{-}T_d)$, wobei b eine Konstante ist.

**9.** Verfahren gemäss Anspruch 8, worin angenommen wird, dass b 1,54 ist.

**10.** Verfahren gemäss Anspruch 8, worin der Sensor (1) zudem eine konstante Wärmequelle über dem Wärmeisolator (4) aufweist, und worin das besagte Bestimmen der Kernkörpertemperatur ($T_b$) unter Verwendung der Gleichung (5) durchgeführt wird, wobei ein Ausdruck -$\beta$Q dazu hinzugefügt wird, wobei $\beta$ eine Konstante und Q die Leistung der konstanten Wärmequelle ist.

**11.** Verfahren gemäss einem der Ansprüche 8 bis 10, worin der Sensor (1) zudem eine Perfusionssonde zum Messen eines Perfusionsparameters umfasst, und worin das Verfahren zudem einen Schritt des Messens des Perfusionsparameters und des Verwendens dieses Parameters zum Bestimmen eines Werts für die Konstante in Gleichung (5) umfasst.

**Revendications**

**1.** Capteur (1) pour mesurer la température corporelle interne ($T_b$) d'un utilisateur, comprenant:

une première sonde de température (2) à placer contre la peau (3) de l'utilisateur pour mesurer une première température ($T_c$);
une deuxième sonde de température (6) à une distance de la première sonde de température (2), pour mesurer une deuxième température ($T_d$) ; et
un isolant thermique (4) prévu entre la première et la deuxième sonde de température (2, 6) pour isoler thermiquement la première et la deuxième sonde de température (2, 6) l'une de l'autre; dans lequel l'isolant thermique (4) renferme la première sonde de température (2), formant une surface de contact (7) s'étendant dans le plan de la première sonde de température (2) et destinée à être mise en contact avec la peau (3) ;
le capteur (1) comprenant en outre un blindage thermiquement conducteur (5) recouvrant au moins une partie de l'isolant thermique (4), la deuxième sonde de température (6) étant en contact avec une portion (9) du blindage conducteur (5) agencé pour être en contact avec la peau (3) ;
**caractérisé en ce que**
le capteur (1) est configuré pour déterminer la température corporelle interne ($T_b$) à partir de la première et de la deuxième température mesurée ($T_c$, $T_d$) en utilisation l'équation (7):

$$T_b = F(s)T_c + G(s)T_d + C$$

où F(s) et G(s) sont des fonctions de transfert choisies de manière à compenser la variation dynamique des paramètres du système formé par le capteur (1) et la peau (3), et C est une constante ou un signal déterminé par la puissance dissipée sur le blindage thermiquement conducteur (5) choisi de manière à annuler l'effet de ladite puissance dissipée sur la température corporelle interne ($T_b$) déterminée, en sorte que le capteur (1) n'exige pas de dispositif de chauffage régulé.

**2.** Capteur (1) selon la revendication 1, dans lequel la deuxième sonde de température (6) est un capteur de température absolue et la première sonde de température (2) est un thermocouple dont la référence est située à une température sensiblement identique à celle mesurée par la deuxième sonde de température (6).

**3.** Capteur (1) selon l'une des revendications 1 ou 2, comprenant en outre une sonde de perfusion pour mesurer un paramètre de perfusion en fonction du niveau de perfusion sanguine de la peau.

**4.** Capteur (1) selon l'une quelconque des revendications 1 à 3, dans lequel le capteur (1) est configuré pour déterminer la température corporelle interne ($T_b$) à partir de la première et de la deuxième température mesurée ($T_c$, $T_d$) en utilisation l'équation (5): $T_b = T_c + b\,(T_c\text{-}T_d)$, où b est une constante.

**5.** Système de capteur (20) comprenant le capteur (1) **caractérisé par** l'une quelconque des revendications 1 à 4 et un dispositif de commande commandant le fonctionnement du capteur (1).

**6.** Système de capteur (20) selon la revendication 5, dans lequel ledit dispositif de commande est situé sur un premier circuit imprimé (21) monté dans le capteur (1).

**7.** Procédé pour mesurer une température corporelle interne ($T_b$) d'un utilisateur, utilisant le capteur (1) **caractérisé par** l'une quelconque des revendications 1 à 4, comprenant :

mettre à disposition le capteur (1) sur l'utilisateur de manière à ce que la première sonde de température (2) et la surface de contact (7) de l'isolant thermique (4) soient en contact avec la peau (3) ;
mesurer la première et la deuxième température ($T_c$, $T_d$) avec la première et la deuxième sonde de température (2, 6) respectivement ; et
déterminer la température corporelle interne ($T_b$) à partir de la première et de la deuxième température mesurée ($T_c$, $T_d$) en utilisant l'équation (7) :

$$T_b = F(s)T_c + G(s)T_d + C$$

où F(s) et G(s) sont des fonctions de transfert choisies de manière à compenser la variation dynamique des paramètres du système formé par le capteur (1) et la peau (3), et C est une constante ou un signal déterminé par la puissance dissipée sur le blindage thermiquement conducteur (5) choisi de manière à annuler l'effet de ladite puissance dissipée sur la température corporelle interne ($T_b$) déterminée.

**8.** Procédé selon la revendication 7, dans lequel la détermination de la température corporelle interne ($T_b$) à partir de la première et de la deuxième température mesurée ($T_c$, $T_d$) est effectuée en utilisation l'équation (5): $T_b = T_c + b (T_c - T_d)$, où b et une constante.

**9.** Procédé selon la revendication 8, dans lequel b est présumé être 1,54.

**10.** Procédé selon la revendication 8, dans lequel le capteur (1) comprend en outre une source de chaleur constante au-dessus de l'isolant thermique (4) et dans lequel ladite détermination de la température corporelle interne ($T_b$) est effectuée en utilisant l'équation (5) auquel un terme $-\beta Q$ est ajouté, où $\beta$ est une constante et Q est la puissance de la source de chaleur constante.

**11.** Procédé selon l'une quelconque des revendications 8 à 10, dans lequel le capteur (1) comprend en outre une sonde de perfusion pour mesurer un paramètre de perfusion et dans lequel le procédé comprend en outre une étape de mesure du paramètre de perfusion et l'utilisation de ce paramètre pour déterminer une valeur pour la constante dans l'équation (5).

Fig. 1

Fig. 2

Fig. 3

Fig. 4

Fig. 5

Fig. 6

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7299090 B
- US 2004076215 A
- EP 0399061 A
- US 2003169800 A